# EUROPÄISCHE PATENTSCHRIFT

(11) **EP 1 110 031 B1**
(45) Veröffentlichungstag und Bekanntmachung des Hinweises auf die Patenterteilung: **23.06.2004**
(21) Anmeldenummer: 99944444.1
(22) Anmeldetag: 19.08.1999
(51) Int. Cl.: F21V 8/00

(54) **LEUCHTE MIT LICHTLEITELEMENT**
LIGHT WITH A LIGHT-GUIDING ELEMENT
LAMPE DOTEE D'UN GUIDE DE LUMIERE

(30) Priorität: 24.08.1998 DE 19838388; 23.11.1998 DE 19853956; 03.03.1999 DE 29903847 U
(43) Veröffentlichungstag der Anmeldung: 27.06.2001
(73) Patentinhaber: Zumtobel Staff GmbH, 6850 Dornbirn (AT)
(72) Erfinder: BOHLE, Markus, A-6850 Dornbirn (AT); FRÖIS, Beatrix, A-6020 Innsbruck (AT)
(74) Vertreter: Schmidt-Evers, Jürgen, Dipl.-Ing.
(86) Internationale Anmeldenummer: PCT/EP1999/006084
(87) Internationale Veröffentlichungsnummer: WO 2000/011399

(56) Entgegenhaltungen:
- EP-A- 0 785 458
- EP-A- 0 787 942
- GB-A- 2 259 176
- US-A- 5 598 280
- PATENT ABSTRACTS OF JAPAN vol. 16, no. 374 (M-1293), 11. August 1992 (1992-08-11) & JP 04 118803 A (N.SHIGEAKI), 20. April 1992 (1992-04-20)

## Beschreibung

Die Erfindung betrifft eine Leuchte mit einem insbesondere keilförmigen Lichtleitelement nach den Ansprüchen 1 oder 3.

Derartige Leuchten finden bei der Beleuchtung von Innenräumen insbesondere in solchen Fällen Verwendung, in denen die wärmeerzeugende Lichtquelle möglichst nicht am Ort der Beleuchtung selber angeordnet sein soll.

Bei solchen Leuchten wird Licht einer Lichtquelle seitlich über eine Lichteintrittsfläche in ein Lichtleitelement eingekoppelt. Das sich im wesentlichen parallel zu den Seitenflächen des Lichtleitelements ausbreitende Licht wird aufgrund des ausgewählten Brechungsindexes des Materials an den Seitenflächen des Lichtleitelements total reflektiert, wie dies aus der Lichtleitertechnik bekannt ist. Um eine Beleuchtung des Raumes zu erzielen, wird das Licht in geeigneter Weise an einer der Seitenflächen aus dem Lichtleitelement ausgekoppelt.

Eine optische Vorrichtung zum Sammeln und Streuen von Licht ist in der Druckschrift DE-OS 29 42 655 beschrieben. Diese Vorrichtung dient der Hintergrundbeleuchtung optischer Anzeigen und ist dementsprechend so ausgebildet, daß eine möglichst gleichmäßige Lichtabstrahlung in alle Richtungen erfolgt. Zu diesem Zweck weist das Lichtleitelement eine lichtdurchlässige Streufläche sowie eine der Streufläche gegenüberliegende und nach innen reflektierende Seitenfläche auf. Zum Auskoppeln des Lichts aus dem Lichtleitelement weist die reflektierende Seitenfläche eine Folge von Stufen auf, die durch im Winkel angeordnete Abschnitte miteinander verbunden sind. Trifft Licht auf diese im Winkel angeordneten Abschnitte, wird es derart umgelenkt, daß es das Lichtleitelement über die Streufläche verlassen kann.

Diese Vorrichtung eignet sich allerdings nicht zur Raumbeleuchtung, da aufgrund der aufgerauhten Streufläche das Licht willkürlich in unterschiedliche Richtungen gebrochen wird, wobei in bestimmten Richtungen Blendeffekte auftreten können. Gerade bei Leuchten zur Raumbeleuchtung ist es allerdings oftmals erwünscht, daß das Licht die Lichtleitelemente nur in einem relativ eng vorgegebenen Winkelbereich verläßt.

Eine weitere Beleuchtungsanordnung zur Hintergrundbeleuchtung ist in der Druckschrift WO 95/12782 beschrieben. Die dort beschriebene Einrichtung findet in erster Linie bei der Hintergrundbeleuchtung von Flachbildschirmen elektronischer Anzeigen, beispielsweise bei LCD-Bildschirmen Verwendung. Sie weist eine Lichtquelle und ein im wesentlichen plattenförmiges Lichtleitelement mit einer Lichteintrittsfläche, sowie eine auf einer Seitenfläche des Lichtleitelements angeordnete Mikroprismenanordnung auf. Die einzelnen Mikroprismen dieser Beleuchtungsanordnung haben eine mit der Seitenfläche des Lichtleitelements optisch gekoppelte Lichteintrittsfläche, eine zu dieser parallel angeordnete Lichtaustrittsfläche und zumindest eine Seitenfläche zwischen Lichteintrittsund Lichtaustrittsfläche, die derart geneigt ist, daß das auf diese Seitenfläche des Mikroprismas auftreffende Licht so reflektiert wird, daß es die Lichtaustrittsfläche des Mikroprismas im wesentlichen senkrecht zu der Seitenfläche des Lichtleitelements bzw. der Lichtaustrittsfläche des Mikroprismas verläßt. Die Materialien des Lichtleitelements und das der Mikroprismen haben vorzugsweise einen gleichen oder ähnlichen Brechungsindex, so daß das Licht aus dem Lichtleitelement problemlos in die Mikroprismen einkoppeln kann. Dabei können die Mikroprismen auch eine längliche Form haben und sich sogar über die ganze Länge des Lichtleitelements erstrecken.

In Weiterbildung dieser Beleuchtungsanordnung ist in der WO 96/21122 derselben Anmelderin eine Beleuchtungsanordnung beschrieben, bei der zwischen der Seitenfläche des Lichtleitelements und der Mikroprismenanordnung eine Schicht aus einem Material mit einem niedrigeren Brechungsindex als derjenige des Lichtleitelements vorgesehen ist. Diese Schicht verhindert, daß Licht mit einem großen Einfallswinkel in Bezug auf das Lot der Seitenfläche des Lichtleitelements in die Mikroprismen eintreten kann. Bei einer der in der WO 96/21122 offenbarten Ausfuhrungsformen (Fig. 1C) ist das Lichtleitelement keilförmig ausgebildet, um mit größer werdendem Abstand von der Lichtquelle kleinere Einfallswinkel des Lichts in Bezug auf das Lot der Seitenfläche des Lichtleitelements zu erzeugen, bei denen das Licht an der Seitenfläche des Lichtleitelements nicht mehr totalreflektiert wird.

Die Hauptaufgabe der Prismen besteht in den beiden oben genannten Anordnungen darin, das Licht aus dem Lichtleitelement auszukoppeln. Sie beeinflussen zwar unter anderem auch die Abstrahlung in die Umgebung, dieser Einfluß ist aber durch die Tatsache, daß das Licht unter beliebigen Winkeln in die Prismen eintreten kann sehr reduziert. Somit sind auch diese Beleuchtungsanordnungen zur Raumbeleuchtung nur bedingt geeignet.

Ausgehend von dem genannten Stand der Technik ist es daher eine Aufgabe der vorliegenden Erfindung, eine Leuchte anzugeben, die auf einfache Art und Weise ein Auskoppeln des in dem Lichtleitelement transportierten Lichts in einem für Beleuchtungszwecke geeigneten Winkelbereich erlaubt.

Gemäß einem ersten Aspekt der vorliegenden Erfindung wird diese Aufgabe durch eine Leuchte mit den Merkmalen des Anspruchs 1 gelöst.

Das in der erfindungsgemäßen Leuchte eingesetzte Lichtleitelement hat im wesentlichen eine Keilform, wobei die am weitesten Abstand der beiden Keilflächen befindliche Stirnfläche des Lichtleitelements die Lichteintrittsfläche für das von der Lichtquelle abgestrahlte Licht ist, die erste Keilfläche mit der Lichteintrittsfläche einen spitzen Winkel, d.h. einen Winkel kleiner 90°, derart bildet, daß sie das in die Lichteintrittsfläche eingestrahlte Licht gegen die zweite Keilfläche hin reflektiert, zur Reflektion des Lichts die erste Keilfläche Flanckenabschnitte aufweist, die in Bezug auf die Ebene der Lichtaustrittsfläche nach innen geneigt sind, und die zweite Keilfläche die Lichtaustrittsfläche des Lichtleitelements ist. Durch die Keilform des Lichtleitelements wird einerseits eine gleichmäßige Abstrahlung von Licht über die gesamte Breite des Lichtleitelements erzielt und zum anderen eine Abstrahlung von Licht aus dem Lichtleitelement in einem für Beleuchtungszwecke geeigneten Winkelbereich ohne Blendwirkung für den Betrachter gewährleistet. Zusätzlich ist die Lichtaustrittsfläche quer zur Keilrichtung mit nebeneinander liegenden Erhebungen und Einbuchtungen profiliert, so daß die Abstrahlcharakteristik des Lichtleitelements weiter verbessert wird.

Zusätzlich zur Profilierung der Lichtaustrittsfläche des Lichtleitelements ist es von Vorteil, mit einem Abstand vor der Lichtaustrittsfläche einen transparenten Lichtstreukörper anzuordnen, dessen der Lichtaustrittsfläche abgewandte Seite mit nebeneinander liegenden Erhebungen und Einbuchtungen profiliert ist, wobei die Profilierung des Lichtstreukörpers im wesentlichen quer zur Profilierung der Lichtaustrittsfläche orientiert ist. Durch diesen Lichtstreukörper kann ein mögliches Sichtbarwerden der Konturen der Profilierung unter bestimmten Betrachtungswinkeln unterbunden werden.

Gemäß einem zweiten Aspekt der vorliegenden Erfindung wird die oben genannte Aufgabe durch eine Leuchte, welche die Merkmale des Anspruchs 3 aufweist, gelöst. Das in der Leuchte eingesetzte Lichtleitelement hat ebenfalls im wesentlichen eine Keilform, wobei die am weitesten Abstand der beiden Keilflächen befindliche Stirnfläche des Lichtleitelements die Lichteintrittsfläche für das von der Lichtquelle abgestrahlte Licht ist, die erste Keilfläche mit der Lichteintrittsfläche einen spitzen Winkel derart bildet, daß sie das in die Lichteintrittsfläche eingestrahlte Licht gegen die zweite Keilfläche hin reflektiert, zur Reflektion des Lichts die erste Keilfläche Flanckenabschnitte aufweist, die in Bezug auf die Ebene der Lichtaustrittsfläche nach innen geneigt sind, und die zweite Keilfläche die Lichtaustrittsfläche des Lichtleitelements ist. Im Gegensatz zu der Ausführungsform gemäß Anspruch 1 ist die Lichtaustrittsfläche des Lichtleitelemeois nicht profiliert, sondern vor der Lichtaustrittsfläche des Lichtleitelements ist ein erster transparenter Lichtstreukörper mit Abstand angeordnet, dessen der Lichtaustrittsfläche abgewandte Seite mit nebeneinander liegenden Erhebungen und Einbuchtungen profiliert ist. Durch den Abstand zwischen dem Lichtstreukörper und dem Lichtleitelement wird vermieden, daß Licht unter beliebigen Winkeln in den Lichtstreukörper eintritt, wodurch die Effektivität der Profilierung deutlich erhöht wird.

Analog zu der ersten Ausführungsform ist zusätzlich zu dem ersten Lichtstreukörper vor der Lichtaustrittsfläche des Lichtleitelements ein zweiter transparenter Lichtstreukörper angeordnet; dessen der Lichtaustrittsfläche abgewandte Seite mit nebeneinander liegenden Erhebungen und Einbuchtungen profiliert ist, wobei die Profilierung des zweiten Lichtstreukörpers im wesentlichen quer zu der Profilierung des ersten Lichtstreukörpers orientiert ist.

Vörzugsweise beträgt der Neigungswinkel Flankenabschnitte in Bezug auf die Ebene der Lichtaustrittsfläche etwa 30° bis 50°. Außerdem sind gemäß einer Weiterbildung der Erfindung diese Flankenabschnitte insbesondere an dem der Lichtquelle abgewandten Ende des Lichtleitelements konkav oder konvex gekrümmt ausgebildet, so daß der Winkelbereich des aus dem Lichtleitelement austretenden Lichtes über die gesamte Breite des Lichtleitelements möglichst gleichmäßig im geeigneten Bereich von etwa 60° bis 90° zur Ebene der Lichtaustrittsfläche liegt.

Ferner sind vorteilhafterweise zwischen diesen Flankenabschnitten der ersten Keilfläche des Lichtleitelements Abschnitte vorgesehen, die entweder etwa parallel zu der Ebene der Lichtaustrittsfläche ausgerichtet oder in Bezug auf die Ebene der'Lichtaustrittsfläche nach außen geneigt sind, wobei im letzteren Fall ihr Neigungswinkel in Bezug auf die Ebene der Lichtaustrittsfläche kleiner als etwa 30° ist.

Weiter ist es aus herstellungstechnischen Gründen von Vorteil, das Lichtleitelement aus mehreren Einzelteilen herzustellen. Auf diese Weise können insbesondere bei der Herstellung des Lichtleitelements mittels Künststoffspritzen Materialfehler aufgrund eines möglicherweise ungleichmäßigen Abkühlens der Kunststoff Spritzmasse vermieden werden.

Die erfindungsgemäße Leuchte kann beispielsweise eine Lichtquelle aufweisen, die zwischen zwei Lichtleitelementen angeordnet ist, oder aber ein Lichtleitelement, welches zwischen zwei Lichtquellen angeordnet ist.

In einer Weiterbildung der Erfindung sind die Lichtquellen der Beleuchtungsanordnung von einer Reflektoranordnung umgeben, die gewährleistet, daß das gesamte von den Lichtquellen abgestrahlte Licht in die Lichtleitelemente eingekoppelt wird, so daß eine möglichst hohe Lichtausbeute erzielt werden kann.

Weitere vorteilhafte Ausgestaltungen und Weiterbildungen der vorliegenden Erfindung sind Gegenstand weiterer Unteransprüche.

Die Erfindung wird im folgenden anhand von bevorzugten Ausführungsbeispielen unter Bezugnahme auf die beiliegende Zeichnung näher erläutert. Darin zeigen:
- Fig. 1: ein erstes Ausführungsbeispiel einer Leuchte gemäß der vorliegenden Erfindung in perspektivischer Unteransicht;
- Fig. 2: ein erstes Ausführungsbeispiel eines in der Leuchte eingesetzten Lichtleitelements gemäß der vorliegenden Erfindung in schematischer Darstellung im Schnitt A-A gemäß Fig. 1;
- Fig. 3: ein zweites Ausführungsbeispiel eines in der Leuchte eingesetzten Lichtleitelements gemäß der vorliegenden Erfindung in schematischer Darstellung im Schnitt A-A gemäß Fig. 1;
- Fig. 4: ein drittes Ausführungsbeispiel eines in der Leuchte eingesetzten Lichtleitelements gemäß der vorliegenden Erfindung in schematischer Darstellung im Schnitt A-A gemäß Fig. 1;
- Fig. 5A: ein zweites Ausführungsbeispiel einer Leuchte gemäß der vorliegenden Erfindung in schematischer Darstellung im Schnitt A-A gemäß Fig. 1;
- Fig. 5B: ein drittes Ausführungsbeispiel einer Leuchte gemäß der vorliegenden Erfindung in schematischer Darstellung im Schnitt A-A gemäß Fig. 1;
- Fig. 5C: die Leuchte von Fig. 5B im Schnitt Vc-Vc gemäß Fig. 5B;
- Fig. 5D: ein viertes Ausführungsbeispiel einer Leuchte gemäß der vorliegenden Erfindung in schematischer Darstellung im Schnitt A-A gemäß Fig. 1;
- Fig. 6: ein fünftes Ausführungsbeispiel einer Leuchte gemäß der vorliegenden Erfindung in schematischer Darstellung im Schnitt A-A gemäß Fig. 1;
- Fig. 7: ein sechstes Ausfiihrungsbeispiel einer Leuchte gemäß der vorliegenden Erfindung in schematischer Darstellung im Schnitt A-A gemäß Fig. 1;
- Fig. 8: ein siebtes Ausführungsbeispiel einer Leuchte gemäß der vorliegenden Erfindung in schematischer Darstellung in Draufsicht; und
- Fig. 9A bis C: weitere Ausführungsbeispiele eines in der Leuchte eingesetzten Lichtleitelements gemäß der vorliegenden Erfindung in schematischer Darstellung im Schnitt A-A gemäß Fig. 1.

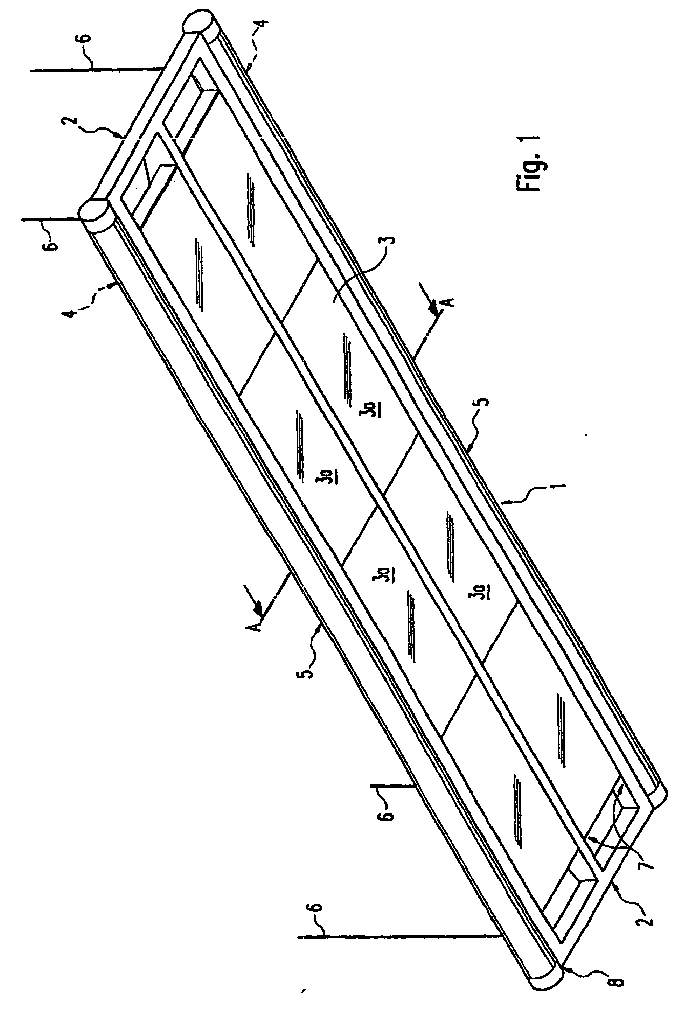

In Fig. 1 ist zunächst ein erstes Ausführungsbeispiel einer Leuchte in Form einer Deckenleuchte in perspektivischer Darstellung gezeigt. Die dargestellte Leuchte dient der Raumbeleuchtung, wobei im Rahmen der vorliegenden Erfindung hierunter grundsätzlich Innenraumbeleuchtungen als auch Außenbeleuchtungen zu verstehen sind. Der Begriff Raumbeleuchtung soll insbesondere auf den Unterschied zu Beleuchtungsanordnungen für Hintergrundbeleuchtungen, wie sie in der Beschreibungseinleitung anhand des Standes der Technik näher erläutert sind, hinweisen.

Die Leuchte 1 weist einen Leuchtenträger 2, zwei aus mehreren gleichartigen Teilelementen 3a zusammengesetzte scheiben- bzw. plattenförmigen Lichtleitelemente 3, zwei jeweils bezüglich eines Lichtleitelements 3 stirnseitig angeordnete Lichtquellen 4 und jeweils eine an der Schmalseite, an der sich die Lichtquelle 4 befindet, angeordnete Reflektoranordnung 5 auf. Als Lichtquelle 4 ist im Ausführungsbeispiel von Fig. 1 eine längliche Leuchtstoffröhre eingesetzt. Ferner sind an der Leuchte 1 Haltevorrichtungen 6 zum Befestigen der Leuchte 1 an einem nicht dargestellten Träger, wie zum Beispiel einer Raumdecke, vorgesehen. Weiter sind in Fig. 1 Haltevorrichtungen 7 zum lösbaren Befestigen der Lichtleitelemente 3 an dem Leuchtenträger 2 und Haltevorrichtungen 8 zum lösbaren Befestigen der Reflektoranordnungen 5 an dem Leuchtenträger 2 angedeutet. Betriebsmittel, wie elektrische Anschlußteile und beispielsweise Vorschaltgeräte für die Leuchtstoffröhren 4 sind der Einfachheit halber in Fig. 1 weggelassen.

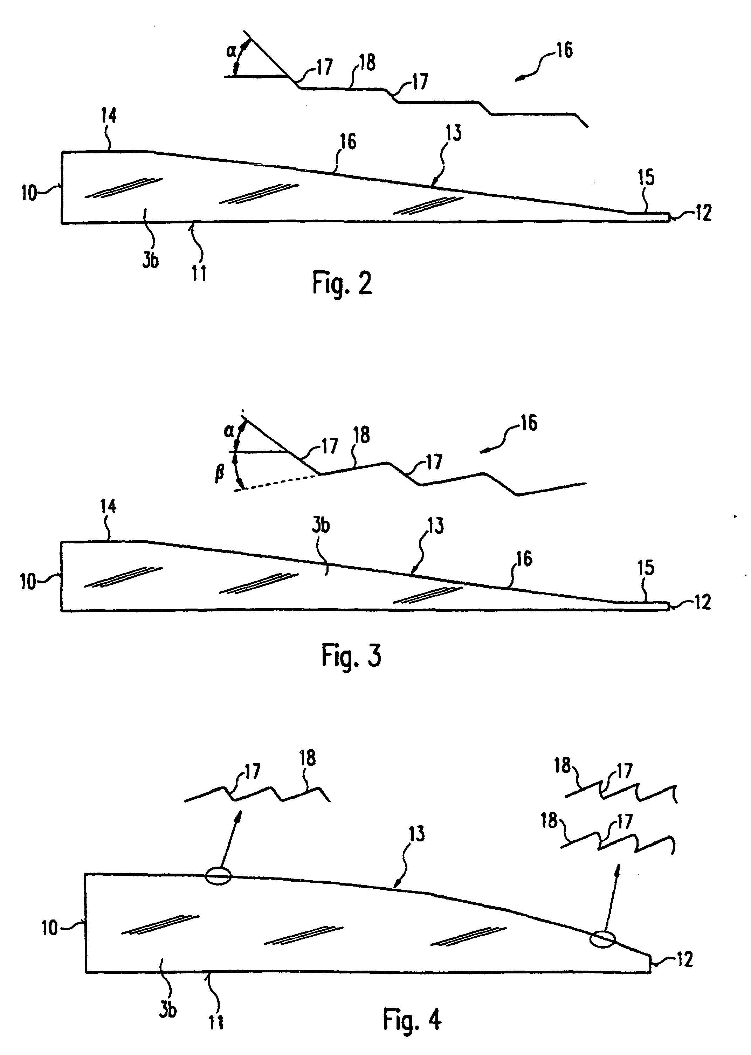

Nachfolgend werden anhand der in den Fig. 2 bis 4 dargestellten schematischen Querschnittsdarstellungen drei bevorzugte Ausführungsbeispiele eines Lichtleitelements 3 näher beschrieben.

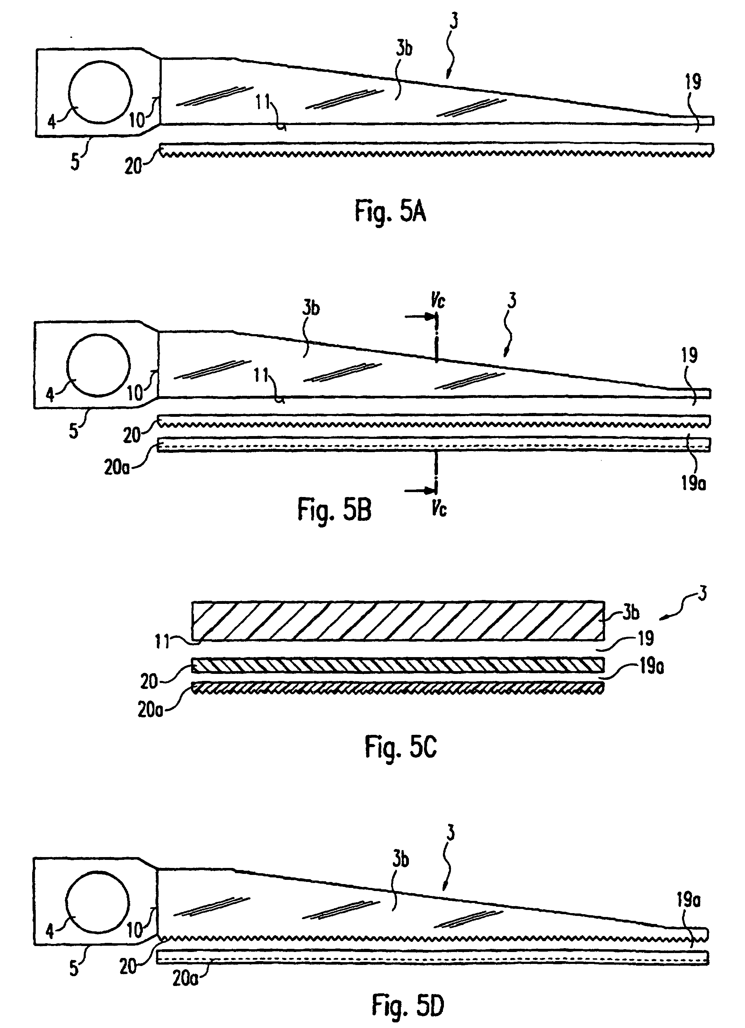

Das im wesentlichen keilförmige Lichtleitelement 3b besteht aus einem Lichtleitkörper 3b, wobei die am weitesten Abstand der beiden Keilflächen 11, 13 befindliche Stirnfläche 10 die Lichteintrittsfläche des Lichtleitelements für das von der Lichtquelle 4 abgestrahlte Licht ist, durch die Licht von der in der Nähe dieser Lichteintrittsfläche 10 angeordneten Lichtquelle 4 in an sich bekannter Weise in den Lichtleitkörper 3b eingekoppelt werden kann. Weiter bildet die erste Keilfläche 13 mit der Lichteintrittsfläche 10 im Mittel einen spitzen Winkel, d.h. einen Winkel von kleiner 90°. Durch diese Konstruktion wird das in die Lichteintrittsfläche 10 eingestrahlte Licht gegen die als Lichtaustrittsfläche dienende zweite Keilfläche 11 hin reflektiert, aus der das in dem Lichtleitkörper 3b transportierte Licht in der weiter unten beschriebenen Weise ausgekoppelt werden kann.. Aus diesem Grund wird die erste Keilfläche 13 im folgenden auch als Reflexionsfläche bezeichnet. Alle in den Fig. 2 bis 4 dargestellten Lichtleitkörper 3b weisen eine glatte Lichtaustrittsfläche 11 auf. Wie weiter unten anhand von Fig. 5D noch erläutert werden wird, kann die Lichtaustrittsfläche aber auch profiliert sein. Die der Lichteintrittsfläche 10 gegenüberliegende Stirnseite 12 des Lichtleitkörpers 3b ist reflektierend ausgebildet.

Der Lichtleitkörper 3b besteht aus einem transparenten Material, wie beispielsweise Glas oder einem Kunststoffmaterial. Der Brechungsindex dieses Materials ist derart gewählt, daß bei dem Wellenlängenbereich des ausgewählten Lichts, beispielsweise etwa 400 bis 700 nm oder sogar etwa 250 bis 700 nm, bei großen Einfallswinkeln in Bezug auf das Lot der Grenzflächen des Lichtleitkörpers 3b, d.h. genauer bei Einfallswinkeln größer als der Grenzwinkel, eine Totalreflexion des Lichts im Inneren des Lichtleitkörpers 3b stattfindet. Geeignete Materialien besitzen einen Brechungsindex von etwa 1,45 bis 1,65, vorzugsweise etwa 1,50 bis 1,60. Somit wird das von einer Lichtquelle 4 durch die Lichteintrittsfläche 10 in den Lichtleitkörper 3b eingekoppelte Licht, welches sich im wesentlichen parallel zu der Lichtaustrittsfläche 11 des Lichtleitkörpers 3b ausbreitet, zunächst in dieser Richtung durch den Lichtleitkörper 3b transportiert ohne ihn durch die Lichtaustrittsfläche 11 verlassen zu können.

Außerdem besitzt der Lichtleitkörper 3b eine der Lichtaustrittsfläche 11 gegenüberliegend angeordnete Reflexionsfläche 13, deren Ebene in den Randbereichen 14, 15 im wesentlichen parallel zu der Lichtaustrittsfläche 11 und in dem Bereich 16 zwischen diesen Randbereichen 14, 15 schräg zu der Lichtaustrittsfläche 11 verläuft. Der Neigungswinkel des Zwischenbereiches 16 bezüglich der Ebene der Lichtaustrittsfläche 11 beträgt vorzugsweise etwa 5° bis 15°, besonders bevorzugt etwa 6° bis 10°, wobei der Lichtleitkörper 3b an der Lichteintrittsfläche 10 höher ausgebildet ist als an der gegenüberliegenden Stirnseite 12. Die Randbereiche 14, 15 des Lichtleitkörpers 3b dienen als Auflage- oder Halteflächen für die Befestigung des Lichtleitelements 3 in einer Beleuchtungsanordnung 1.

Wie insbesondere in den vergrößerten Ausschnitten der Fig. 2 und 3 deutlich zu erkennen ist, weist die Reflexionsfläche 13 in dem Zwischenbereich 16 Flankenabschnitte 17 auf, die in Bezug auf die Ebene der Lichtaustrittsfläche 11 in Ausbreitungsrichtung des Lichts in dem Lichtleitkörper 3b geneigt sind. Der Neigungswinkel α der Flankenabschnitte 17 beträgt vorzugsweise 30° bis 50°, besonders bevorzugt 35° bis 45°, wobei der gewählte Neigungswinkel α von dem Brechungsindex des Materials des Lichtleitkörpers 3b und von der Wahl des Lichts bzw. dessen Wellenlänge abhängt. Außerdem ist die Reflexionsfläche 13 bzw. sind zumindest die Flankenabschnitte 17 des Zwischenbereiches 16 vorteilhafterweise totalreflektierend ausgebildet, um zu gewährleisten, daß kein Licht durch diese Reflexionsfläche 13 aus dem Lichtleitkörper 3b austreten kann. Hierfür ist die Außenseite der Reflexionsfläche 13 beispielsweise mit einem reflektierenden Material beschichtet, vorzugsweise verspiegelt.

Die Abschnitte 18 der Reflexionsfläche 16 zwischen diesen Flankenabschnitten 17 sind in dem Ausführungsbeispiel von Fig. 2 parallel zu der Ebene der Lichtaustrittsfläche 11 ausgebildet. Bei dem Ausführungsbeispiel von Fig. 3 sind diese Abschnitte 18 hingegen ebenfalls um einen Neigungswinkel β geneigt, so daß sich im wesentlichen ein zickzackförmiger Verlauf der Reflexionsfläche 13 in dem Zwischenbereich 16 ergibt. Der Neigungswinkel β der Abschnitte 18 ist vorzugsweise kleiner als etwa 30°, besonders bevorzugt sind etwa 10°. Die lichttechnisch zur Zeit am meisten bevorzugte Ausführungsform des Lichtleitkörpers 3b weist eine Reflexionsfläche 13 mit einem Zwischenbereich 16 auf, dessen Flankenabschnitte 17 mit einem Neigungswinkel α von etwa 40° nach unten und dessen Abschnitte 18 zwischen den Flankenabschnitten 17 mit einem Neigungswinkel β von etwa 10° nach oben in Bezug auf die Ebene der Lichtaustrittsfläche 11 geneigt sind.

Die derart vorgesehenen Flankenabschnitte 17 reflektieren das auf sie auftreffende Licht zurück in das Innere des Lichtleitkörpers 3b. Hierbei werden auch Lichtstrahlen, die etwa parallel zu der Ebene der Lichtaustrittsfläche 11 im Lichtleitkörper 3b verlaufen und deshalb aus der Lichtaustrittsfläche 11 wegen Überschreiten des Grenzwinkels für die Totalreflexion nicht austreten können, von den Flankenabschnitten 17 aufgrund des Neigungswinkels α derart reflektiert, daß sie unter einem Einfallswinkel auf die Lichtaustrittsfläche 11 treffen, unter dem sie den Lichtleitkörper 3b verlassen können. Die spezielle Wahl des Neigungswinkels α bewirkt, daß das Licht die Lichtaustrittsfläche 11 des Lichtleitkörpers 3b zumindest größtenteils unter einem Winkel verläßt, der für allgemeine Beleuchtungszwecke geeignet ist, d.h. daß das Licht die Lichtaustrittsfläche 11 im wesentlichen in einem Winkelbereich von etwa 60° bis 90° zu der Ebene der Lichtaustrittsfläche 11 verläßt, so daß das Licht der Beleuchtungsanordnung 1 weitestgehend querentblendet ist.

Zusätzlich können die zwischen den Flankenabschnitten 17 und den Abschnitten 18 auf der Reflexionsfläche 13 gebildeten Kanten mit einem geeigneten Rundungsradius abgerundet sein. Dies ist von Vorteil, um den Hell-Dunkel-Kontrast zwischen direkt angestrahlten und nur indirekt angestrahlten Flankenabschnitten 17 zu vermindern.

Ein weiteres Ausführungsbeispiel eines Lichtleitkörpers 3b ist in Fig. 4 gezeigt. Die Reflexionsfläche weist hierbei in Querrichtung des Lichtleitkörpers 3b eine konkave Krümmung auf, die sich etwa von der Lichteintrittsfläche 10 bis zu der gegenüberliegenden Stirnseite 12 erstreckt, wobei der Lichtleitkörper 3b analog zu den beiden oben beschriebenen Ausführungsbeispielen Randbereiche 14, 15 aufweisen kann, die parallel zu der Lichtaustrittsfläche 11 ausgerichtet sind. Die Krümmung der Reflexionsfläche 13 bewirkt, daß ein gleichmäßigerer Lichtaustritt aus dem Lichtleitkörper 3b über dessen gesamte Breite und damit eine gleichmäßigere Beleuchtungswirkung erzielt wird.

Sind die Flankenabschnitte 17 und die Abschnitte 18 wie in einem der beiden anhand der Fig. 2 und 3 beschriebenen Ausführungsbeispiele ausgebildet, kann dies dennoch bei flachen Betrachtungswinkeln der Leuchte zu einer ungleichmäßigen Lichtverteilung führen, da der Winkelbereich des Lichtaustrittes aus dem Lichtleitkörper 3b in dem der Lichtquelle 4 zugewandten Bereich größer ist, d.h. also auch flachere Austrittswinkel auftreten, als in dem der Lichtquelle 4 abgewandten Bereich des Lichtleitkörpers 3b. Aus diesem Grunde ist es von Vorteil, die Form der Flankenabschnitte 17 in Quezrichtung des Lichtleitkörpers 3b zu verändern.

Wie in den vergrößerten Ausschnitten von Fig. 4 gezeigt, sind die Flankenabschnitte 17 und die Abschnitte 18 in dem der Lichteintrittsfläche 10 zugewandten Bereich wie in den Ausführungsbeispielen der Fig. 2 und 3 ausgebildet. Die Flankenabschnitte 17 sind in Bezug auf die Ebene der Lichtaustrittsfläche 11 in Ausbreitungsrichtung des Lichts in dem Lichtleitkörper 3b nach innen geneigt, während die zwischen diesen Flankenabschnitten 17 liegenden Abschnitte 18 nach außen geneigt sind. In dem der Lichteintrittsfläche 10 abgewandten Bereich des Lichtleitkörpers 3b hingegen sind die Flankenabschnitte 17 konvex oder konkav gekrümmt. Der Übergang von im Querschnitt geradlinig ausgebildeten Flankenabschnitten 17 zu gekrümmt ausgebildeten Flankenabschnitt wird vorzugsweise fließend vorgesehen.

Es ist ferner denkbar, daß durch eine geeignete Wahl der Maße, der Neigungswinkel und der Kantenformen der Flankenabschnitte 17 besondere lichttechnische Effekte, wie beispielsweise das Zerlegen des Lichts in seine Spektralfarben, erzielt werden können. Solche Spezialeffekte könnten insbesondere im Bereich der Werbung von Interesse sein.

Als Beispiel sollen noch Maße für einen derartigen Lichtleitkörper 3b angegeben werden, die in der Praxis für verschiedene Anwendungen geeignet sind. Ein bereits getestetes Ausführungsbeispiel eines Lichtleitkörpers 3b hat im Querschnitt gemäß den Fig. 2 bis 4 eine Gesamtbreite von etwa 120-130 mm, eine Höhe von etwa 16 mm an der Stirnseite der Lichteintrittsfläche 10 und eine Höhe von etwa 2 mm an der der Lichteintrittsfläche 10 gegenüberliegenden Stirnseite 12. Die Breite des flachen Abschnittes 14 der Reflexionsfläche 13 an der der Lichteintrittsfläche 10 zugewandten Stirnseite beträgt etwa 17-19 mm, die Breite des anderen flachen Abschnittes 15 etwa 10 mm. In dem Zwischenbereich 16 der Reflexionsfläche 13 sind etwa 50 durch Flankenabschnitte 17 gebildete Stufen vorgesehen, wobei sich eine Breite dieser Stufen von etwa 2 mm und eine Höhe dieser Stufen von etwa 0,25-0,30 mm ergibt. Diese Maße geben nur einen Anhaltspunkt für mögliche Anwendungsformen, sie sind jedoch nicht als Einschränkung zu verstehen. Der Fachmann wird ohne weiteres, die für den jeweiligen Anwendungsfall am besten geeigneten Abmessungen des Lichtleitkörpers 3b auswählen können. Die jeweilige Länge des Lichtleitkörpers 3b wird entsprechend der Art der verwendeten Lichtquelle 4 angepaßt. Als mögliche Lichtquellen 4 kommen hierbei sowohl längliche oder kreisringförmige Lichtquellen, wie gerade oder gebogene Leuchtstoffröhren, als auch etwa punktförmige Lichtquellen, wie Glühbirnen, in Betracht.

Anhand der schematischen Darstellungen der Fig. 5A bis 8 werden nachfolgend verschiedene Ausführungsbeispiele von Leuchten beschrieben, die mit einem oder mehreren Lichtleitelementen 3 der oben beschriebenen Art ausgerüstet sind, wobei jeweils wahlweise eine beliebige Ausführungsform des Lichtleitelements 3 ausgewählt werden kann.

In Fig. 5A wird das Licht von einer seitlich angeordneten Lichtquelle 4 durch die Lichteintrittsfläche 10 in das Lichtleitelement 3 bzw. den Lichtleitkörper 3b eingekoppelt. Um die Lichtquelle herum ist eine in Fig. 4 nur schematisch angedeutete Reflektoranordnung 5 angeordnet, die gewährleistet, daß sämtliches von der Lichtquelle 4 abgestrahlte Licht in den Lichtleitkörper 3b eingekoppelt wird, so daß eine möglichst hohe Lichtausbeute erzielt werden kann.

Vor der Lichtaustrittsfläche 11 des Lichtleitkörpers 3b ist zusätzlich ein Lichtstreukörper 20 angeordnet, dessen der Lichtaustrittsfläche 11 abgewandte Oberfläche profiliert ist. Ein derartiger Lichtstreukörper 20 dient der Entblendung des aus dem Lichtleitkörper 3b austretenden Lichts in Längsrichtung der Leuchte 1 bzw. des Lichtleitkörpers 3b. Diese Profilierung wird durch länglich verlaufende Rillen oder Einbuchtungen mit dazwischen befindlichen Erhebungen gebildet. Die Erhebungen weisen einen dreieckförmigen Querschnitt auf und erstrecken sich vorzugsweise entlang der Längsachse der Leuchte 1.

Der Winkel der Dreiecksspitze beträgt beispielsweise etwa 140°. Allerdings können die Erhebungen im Querschnitt auch eine andere Form, z.B. eine trapezförmige, eine prismenförmige oder eine abgerundete Form aufweisen.

Vorzugsweise ist der Lichtstreukörper 20, wie in Fig. 5A gezeigt, zu der Lichtaustrittsfläche 11 des Lichtleitkörpers 3b auf Distanz gesetzt. Durch diese konstruktive Maßnahme tritt nur Licht über den Luftspalt 19 in den Lichtstreukörper 20 ein, welches bereits in der gewünschten Weise durch die Flankenabschnitte 17 des Lichtleitkörpers 3b querentblendet ist, und der Lichtstreukörper 20 ist lichttechnisch von dem Lichtleitkörper 3b entkoppelt, so daß sich die Effekte des Lichtleitkörpers 3b und der Prismenstruktur 20 nicht überlagern und daher wesentlich einfacher zu berechnen sind.

In Praxis sind bei der Verwendung eines einzigen Lichtstreukörpers 20 unter bestimmten Betrachtungswinkeln die Konturen der Profilierung sichtbar. Dieser Effekt kann durch die zusätzliche Verwendung eines zweiten Lichtstreukörpers 20a, wobei dessen Profilierung quer zu derjenigen des ersten Lichtstreukörpers 20 orientiert ist, unterbunden werden, da in diesem Fall das Licht gleichmäßiger durchmischt wird. Im dem in Fig. 5B dargestellten Ausführungsbeispiel ist daher unterhalb des ersten Lichtstreukörpers 20, dessen Einbuchtungen und Erhebungen in Querrichtung zur Leuchte 1 ausgerichtet sind, ein zweiter Lichtstreukörper 20a angeordnet, dessen Profilierung in Längsrichtung orientiert ist. Die unterschiedliche Ausrichtung der Profilierungen der beiden Lichtstreukörper 20, 20a ist nochmals in Fig. 5C dargestellt, in der die Leuchte 1 in Längsrichtung im Schnitt Vc-Vc gezeigt ist.

Bevorzugt ist zwischen den beiden Lichtstreukörpern 20, 20a ein weiterer Luftspalt 19a zur lichttechnischen Entkopplung vorgesehen. Würden beide Lichtstreukörper 20, 20a direkt aneinander aufliegen; würde dies an den Kanten zu störenden Effekten führen, da dort keine Brechung stattfindet. Eine direkte Auflage der beiden Lichtstreukörper 20, 20a ist zwar auch unter Vermeidung dieser Effekte realisierbar, würde aber einen höheren Berechnungsaufwand und eine kompliziertere Struktur der Profilierungen erfordern. Denkbar wäre allerdings auch, anstelle der Luftspalte 19 bzw. 19a Schichten mit einem anderen Brechungsindex zu verwenden.

Eine vorteilhafte Ausführungsform unter Verwendung von zwei Profilierungen ist in Fig. 5D dargestellt. Hier weist die Lichtaustrittsfläche 11 selbst eine Profilierung auf und ersetzt somit einen der beiden Lichtstreukörper 20, 20a, in diesem Fall den ersten. Die Möglichkeit, den Lichtstreukörper 20 direkt in den Lichtleitkörper 3b einzuarbeiten, ist natürlich auch bei der Ausführungsform gemäß Fig. 5A gegeben. Weiterhin ist die Reihenfolge der unterschiedlich orientierten Lichtstreukörper 20, 20a bzw. der Profilierungen vertauschbar.

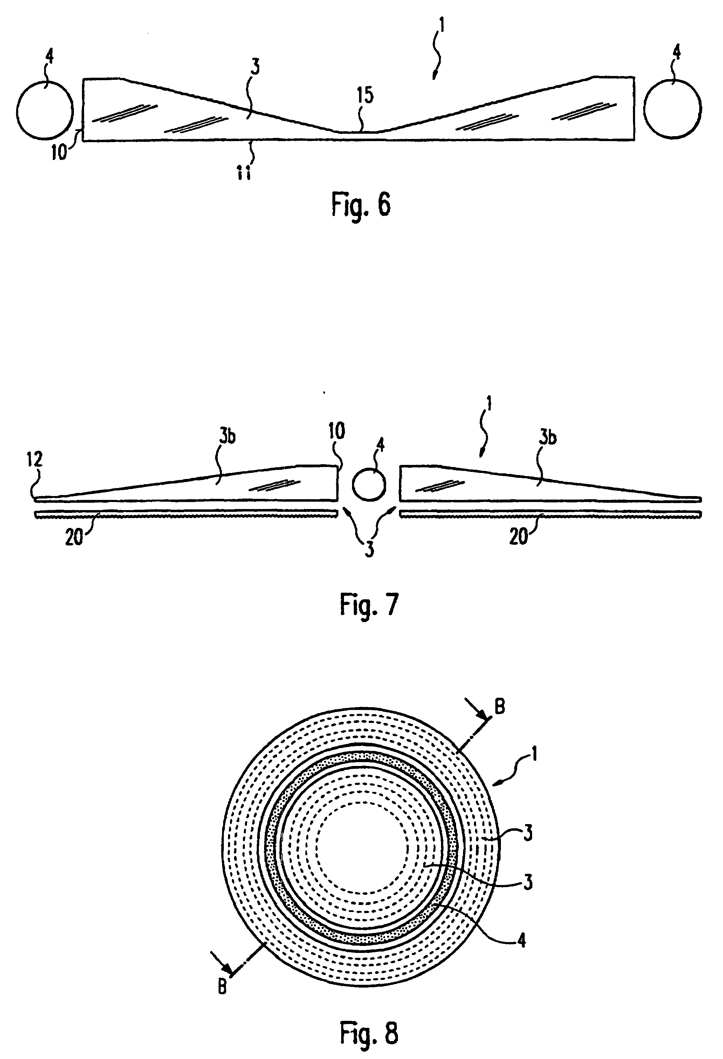

Wie in Fig. 6 gezeigt, ist es ferner möglich, das Lichtleitelement 3 derart auszugestalten, daß es zwischen zwei Lichtquellen 4 verwendet werden kann. Das Lichtleitelement 3 setzt sich in diesem Fall sozusagen aus zwei Lichtleitelementen zusammen, wie sie in den Fig. 2 bis 4 dargestellt sind, wobei diese an den niedrigen, der Lichteintrittsfläche 10 jeweils gegenüberliegenden Stirnseiten 12 zusammengefügt sind. Der auf diese Weise in der Mitte des Lichtleitkörpers 3b gebildete flache Abschnitt 15 ist nicht unbedingt notwendig, er kann aber zum Beispiel für die Erzielung besonderer Effekte, wie einem dunkleren Mittelbereich der Leuchte 1, genutzt werden.

Die beiden Lichtquellen 4 sind selbstverständlich wie in den Fig. 5A bis 5C jeweils mit einer (nicht dargestellten) Reflektoranordnung 5 zum Einkoppeln des gesamten von den Lichtquellen 4 abgestrahlten Lichts in den Lichtleitkörper 3b umgeben. Außerdem kann natürlich auch bei diesem Ausführungsbeispiel der Leuchte 1 die Lichtaustrittsfläche 11 des Lichtleitkörpers 3b eine Profilierung aufweisen oder mindestens ein Lichtstreukörper 20 bzw. 20a vorgesehen sein.

Als nächstes ist in Fig. 7 ein Ausführungsbeispiel einer Leuchte 1 mit einer mittig angeordneten Lichtquelle 4 und zwei außen angeordneten Lichtleitelementen 3 dargestellt. Das Licht wird von der Lichtquelle 4 zu beiden Seiten über die jeweiligen der gemeinsamen Lichtquelle 4 zugewandten Lichteintrittsflächen 10 in die beiden Lichtleitelemente 3 eingekoppelt, wobei die Lichtquelle 4 auch in diesem Fall mit einer nicht gezeigten Reflektoranordnung 5 versehen ist. Die der Lichtquelle 4 abgewandten Stirnseiten 12 der Lichtleitkörper 3b sind jeweils reflektierend ausgebildet, um das Licht in den Lichtleitelementen 3 zu halten. Beide Lichtleitelemente 3 können gemäß einer der Ausführungsformen der Fig. 5A bis 5D ausgebildet sein.

In Fig. 8 ist eine weitere spezielle Ausführungsform einer Leuchte 1 in Draufsicht dargestellt.

Als Lichtquelle 4 wird eine ringförmige Lichtquelle, wie beispielsweise eine kreisringförmig gebogene Leuchtstoffröhre, verwendet. Sowohl innerhalb als auch außerhalb dieser ringförmigen Lichtquelle 4 ist jeweils ein im wesentlichen kreisförmiges bzw. kreisringförmiges Lichtleitelement 3 angeordnet. Im Querschnitt gemäß Schnitt B-B von Fig. 8 ist diese Leuchte 1 eine Kombination der Leuchten der Fig. 6 und 7, wobei anstelle der gemeinsamen Lichtquelle 4 der in Fig. 7 dargestellten Leuchte die gesamte Leuchte von Fig. 6 einzusetzen ist. Die Profilierung wird in diesem Beispiel von konzentrischen Einbuchtungen und Erhebungen gebildet.

Alternativ zu dem Ausführungsbeispiel von Fig. 8 ist es auch denkbar, eine im wesentlichen punktförmige Lichtquelle 4 zu verwenden, die von einem etwa kreisringförmigen oder diskusförmigen Lichtleitelement 3 umgeben ist. Diese Ausgestaltung entspricht im Querschnitt dem Schnitt der Leuchte von Fig. 7.

Anhand der oben beschriebenen unterschiedlichen Gestaltungsmöglichkeiten von Leuchten ist erkennbar, daß das Lichtleitelement 3 gemäß der vorliegenden Erfindung für die verschiedensten Ausführungsformen von Leuchten geeignet ist, wobei der Fachmann ohne weiteres noch weitere in dieser Anmeldung nicht ausdrücklich beschriebene Möglichkeiten auffinden wird. Denkbar wäre beispielsweise die Verwendung eines hohlzylinderförmigen Lichtleitelements, wobei das Licht dann über eine ringförmige Lichtquelle in den Lichtleitkörper eingekoppelt wird.

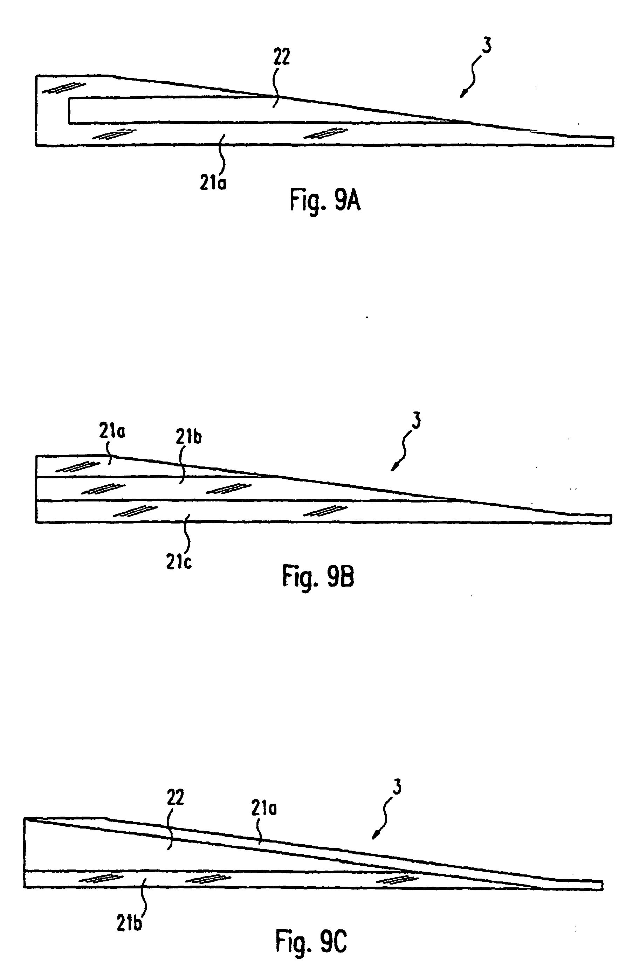

Abschließend soll anhand der Fig. 9A bis C ein weiterer Aspekt der erfindungsgemäßen Ausgestaltung des Lichtleitelements 3 erläutert werden

Insbesondere aus herstellungstechnischen Gründen ist es von Vorteil, das Lichtleitelement 3 mehrteilig aufzubauen. Da insbesondere bei der Herstellung von Produkten mittels Kunststoffspritzen eine gleichmäßige Dicke des Produktes für ein gleichmäßiges Abkühlen der Kunststoff Spritzmasse anzustreben ist, um Verspannungen oder gar Materialfehler bei den Produkten zu vermeiden, ist es vorzugsweise möglich, die Lichtleitkörper 3b gemäß der vorliegenden Erfindung als mehrteilige Grundstruktur herzustellen.

In Fig. 9B ist beispielsweise der Lichtleitkörper 3b aus drei übereinander angeordneten Schichten 21a, 21b und 21c aufgebaut. Die drei Schichten 21a-c werden mittels eines geeigneten, transparenten Klebemittels miteinander fest verbunden. Im Gegensatz dazu wird der Lichtleitkörper 3b gemäß Fig. 9A aus einem etwa U-förmigen Profilelement 21a gebildet und der dadurch gebildete Hohlraum 22 mit einem Medium mit geeignetem Brechungsindex und entsprechender Außenkontur aufgefüllt und mit dem Profilteil 21a verbunden. Es ist hier ebenso denkbar, anstelle des Hohlraumes 22 ein entsprechend geformtes Trägerelement aus einem geeigneten transparenten Material zu verwenden und dieses zu umspritzen.

Der in Fig. 9C dargestellte Lichtleitkörpers 3b ist in ähnlicher Weise aus einem etwa V-förmigen Profil gebildet, welches aus zwei Teilen 21a und 21b aufgebaut ist. Der so gebildete Hohlraum 22 wird wiederum mit einem geeigneten Medium aufgefüllt.

## Patentansprüche

1. Leuchte zur Raumbeleuchtung mit folgenden Merkmalen:
a) wenigstens einer Lichtquelle (4);
b) einem keilförmigen Lichtleitelement (3); wobei
b-1) die am weitesten Abstand der beiden Keilflächen (11, 13) befindliche Stirnfläche (10) des Lichtleitelements (3) die Lichteintrittsfläche für das von der Lichtquelle (4) abgestrahlte Lich ist;
b-2) die erste Keilfläche (13) mit der Lichteintrittsfläche (10) einen spitzen Winkel derart bildet; däß sie das in die Lichteintrittsfläche eingestrahlte Licht gegen die zweite Keilfläche (11) hin reflektiert;
b-3) die zweite Keilfläche (11) die Lichtaustrittsfläche des Lichtleitelements (3) ist; **dadurch gekennzeichnet**, daβ zur Reflektion des Lichts, die erste Keilfläche (13) Flankenabschnitte (17) aufweist, die in Bezug auf die Ebene der Lichtaustrittsfläche (11) nach innen geneigt (α) sind; und daβ
c) die Lichtaustrittsfläche (11) quer zur Keilrichtung mit nebeneinander liegenden Erhebungen und Einbuchtungen profiliert (20) ist.

2. Leuchte nach Anspruch 1,
**dadurch gekennzeichnet,**
**daß** mit einem Abstand (19) vor der profilierten Lichtaustrittsfläche (11) des Lichtleitelements (3) ein transparenter Lichtstreukörper (20a) angeordnet ist, dessen der Lichtaustrittsfläche abgewandte Seite mit nebeneinander liegenden Erhebungen und Einbuchtungen profiliert ist, wobei die Profilierung des Lichtstreukörpers (20a) im wesentlichen quer zu der Profilierung (20) der Lichtaustrittsfläche orientiert ist.

3. Leuchte zur Raumbeleuchtung, mit folgenden Merkmalen:
a) wenigstens einer Lichtquelle (4);
b) einem keilförmigen Lichtleitelement (3); wobei
b-1) die am weitesten Abstand der beiden Keilflächen (11, 13) befindliche Stirnfläche (10) des Lichtleitelements (3) die Lichteintrittsfläche für das von der Lichtquelle (4) abgestrahlte Licht ist;
b-2) die erste Keilfläche (13) mit der Lichteintrittsfläche (10) einen spitzen Winkel derart bildet, daß sie das in die Lichteintrittsfläche eingestrahlte Licht gegen die zweite Keilfläche (11) hin reflektiert;
b-3) die zweite Keilfläche (11) die Lichtaustrittsfläche des Lichtleitelements (3) ist; **dadurch gekennzeichnet,daß** zur Reflektion des Lichts die erste Keilfläche (13) Flankenabschnitte (17) aufweist, die in Bezug auf die Ebene der Lichtaustrittsfläche (11) nach innen geneigt (α) sind; und daß
c') vor der Lichtaustrittsfläche (11) des Lichtleitelements (3) ein erster transparenter plattenförmiger Lichtstreukörper (20) mit Abstand (19) angeordnet ist, dessen der Lichtaustrittsfläche abgewandte Seite mit nebeneinander liegenden Erhebungen und Einbuchtungen profiliert ist.

4. Leuchte nach Anspruch 3,
**dadurch gekennzeichnet,**
**daß** zusätzlich zu dem ersten Lichtstreukörper (20) vor der Lichtaustrittsfläche (11) ein zweiter Lichtstreukörper (20a) angeordnet ist, dessen der Lichtaustrittsfläche (11) des Lichtleitelements (3) abgewandte Seite mit nebeneinander liegenden Erhebungen und Einbuchtungen profiliert ist, wobei die Profilierung des zweiten Lichtstreukörpers (20a) im wesentlichen quer zu der Profilierung des ersten Lichtstreukörpers (20) orientiert ist.

5. Leuchte nach einem der vorhergehenden Ansprüche,
**dadurch gekennzeichnet,**
**daß** der Neigungswinkel (α) der Flankenabschnitte (17) in Bezug auf die Ebene der Lichtaustrittsfläche (11) etwa 30° bis 50° beträgt.

6. Leuchte nach einem der vorhergehenden Ansprüche,
**dadurch gekennzeichnet,**
**daß** die Flankenabschnitte (17) konkav oder konvex ausgebildet sind.

7. Leuchte nach einem der vorhergehenden Ansprüche,
**dadurch gekennzeichnet,**
**daß** zwischen den Flankenabschnitten (17) der ersten Keilfläche (13) Abschnitte (18) vorgesehen sind, die etwa parallel zu der Ebene der Lichtaustrittsfläche (11) ausgerichtet oder in Bezug auf die Ebene der Lichtaustrittsfläche (11) nach außen geneigt (β) sind.

8. Leuchte nach Anspruch 7,
**dadurch gekennzeichnet,**
**daß** der Neigungswinkel (β) der Abschnitte (18) in Bezug auf die Ebene der Lichtaustrittsfläche (11) kleiner als etwa 30° ist.

9. Leuchte nach einem der vorhergehenden Ansprüche,
**dadurch gekennzeichnet,**
**daß** die Profilierung der Lichtaustrittsfläche (11) und/oder der Lichtstreukörper (20, 20a) durch im wesentlichen längliche oder kreisrunde Rillen mit dazwischenliegenden Erhebungen gebildet ist, wobei die Erhebungen im Querschnitt dreieckig, trapezförmig, prismenförmig oder abgerundet ausgebildet sein können.

10. Leuchte nach einem der vorhergehenden Ansprüche,
**dadurch gekennzeichnet,**
**daß** das Lichtleitelement (3) aus wenigstens zwei Einzelteilen (21a-c, 22) hergestellt ist.

11. Leuchte nach Anspruch 10,
**dadurch gekennzeichnet,**
**daß** das Lichtleitelement (3) aus mehreren übereinander angeordneten Schichten (21a-c) besteht.

12. Leuchte nach Anspruch 10,
**dadurch gekennzeichnet,**
**daß** das Lichtleitelement (3) aus einem Profilteil (21a; 21a-b) besteht, dessen Hohlraum (22) mit einem geeigneten transparenten Medium aufgefüllt ist.

13. Leuchte nach Anspruch 10,
**dadurch gekennzeichnet,**
**daß** das Lichtleitelement (3) aus einem Trägerelement aus einem geeigneten transparenten Material besteht, das zur Ausbildung des Lichtleitelements (3) mit einem geeigneten Kunststoffmaterial umspritzt ist.

14. Leuchte nach einem der Ansprüche 1 bis 13,
**dadurch gekennzeichnet,**
**daß** die Leuchte (1) eine Lichtquelle (4) aufweist, die zwischen zwei Lichtleitelementen (3) angeordnet ist.

15. Leuchte nach einem der Ansprüche 1 bis 13,
**dadurch gekennzeichnet,**
**daß** die Leuchte (1) ein Lichtleitelement (3) aufweist, das zwischen zwei Lichtquellen (4) angeordnet ist.

16. Leuchte nach einem der vorhergehenden Ansprüche,
**dadurch gekennzeichnet,**
**daß** die Lichtquelle(n) (4) eine bzw. jeweils eine Reflektoranordnung (5) zum Einkoppeln des gesamten von der bzw. den Lichtquelle(n) abgestrahlten Lichtes in das oder die Lichtleitelement(e) (3) aufweist bzw. aufweisen.

## Claims

1. Light unit for room illumination having the following features:
a) at least one light source (4);
b) a wedge-shaped light-guiding element (3); wherein
b-1) the end face (10) of the light-guiding element (3) that is located at the point at which the two wedge faces (11, 13) are furthest apart is the light-entry face for the light that is emitted by the light source (4);
b-2) the first wedge face (13) forms an acute angle with the light-entry face (10) in such a way that it reflects the light that is radiated into the light-entry face towards the second wedge face (11);
b-3) the second wedge face (11) is the light-exit face of the light-guiding element (3);
**characterised in that**
for reflection of the light the first wedge face (13) has flank sections (17) which are inclined (α) inwards in relation to the plane of the light-exit face (11);
and **in that**
c) the light-exit face (11) is profiled (20) crosswise in relation to the direction of the wedge with adjacent elevations and indentations.

2. Light unit according to claim 1, **characterised in that** arranged at a distance (19) in front of the profiled light-exit face (11) of the light-guiding element (3) there is a transparent light-diffuser (20a), the side of which that faces away from the light-exit face is profiled with adjacent elevations and indentations, with the profiling of the light-diffuser (20a) being orientated substantially crosswise in relation to the profiling (20) of the light-exit face.

3. Light unit for room illumination having the following features:
a) at least one light source (4);
b) a wedge-shaped light-guiding element (3); wherein
b-1) the end face (10) of the light-guiding element (3) that is located at the point at which the two wedge faces (11, 13) are furthest apart is the light-entry face for the light that is emitted by the light source (4);
b-2) the first wedge face (13) forms an acute angle with the light-entry face (10) in such a way that it reflects the light that is radiated into the light-entry face towards the second wedge face (11);
b-3) the second wedge face (11) is the light-exit face of the light-guiding element (3);
**characterised in that**
for reflection of the light the first wedge face (13) has flank sections (17) which are inclined (α) inwards in relation to the plane of the light-exit face (11);
and **in that**
c') arranged at a distance. (19) in front of the light-exit face (11) of the light-guiding element (3) there is a first transparent plate-like light-diffuser (20), the side of which that faces away from the light-exit face is profiled with adjacent elevations and indentations.

4. Light unit according to claim 3, **characterised in that** in addition to the first light-diffuser (20) arranged in front of the light-exit face (11) there is a second light-diffuser (20a), the side of which that faces away from the light-exit face (11) of the light-guiding element (3) is profiled with adjacent elevations and indentations, with the profiling of the second light-diffuser (20a) being orientated substantially crosswise in relation to the profiling of the first light-diffuser (20).

5. Light unit according to any preceding claim, **characterised in that** the angle of inclination (α) of the flank sections (17) in relation to the plane of the light-exit face (11) amounts to approximately 30° to 50°.

6. Light unit according to any preceding claim, **characterised in that** the flank sections (17) are formed concavely or convexly.

7. Light unit according to any preceding claim, **characterised in that** provided between the flank sections (17) of the first wedge face (13) there are sections (18) which are aligned so as to be substantially parallel to the plane of the light-exit face (11) or which are inclined (β) outwards in relation to the plane of the light-exit face (11).

8. Light unit according to claim 7, **characterised in that** the angle of inclination (β) of the sections (18) in relation to the plane of the light-exit face (11) is smaller than approximately 30°.

9. Light unit according to any preceding claim, **characterised in that** the profiling of the light-exit face (11) and/or the light-diffusers (20, 20a) is formed by substantially elongated or circular grooves with elevations lying in between, with it being possible for the elevations to be formed so as to be triangular, trapezoidal, prism-shaped or rounded off in cross section.

10. Light unit according to any preceding claim, **characterised in that** the light-guiding element (3) is produced out of at least two component parts (21a-c, 22).

11. Light unit according to claim 10, **characterised in that** the light-guiding element (3) consists of a plurality of layers (21a-c) arranged one on top of the other.

12. Light unit according to claim 10, **characterised in that** the light-guiding element (3) consists of a profiled portion (21a; 21a-b), the hollow space (22) of which is filled up with a suitable transparent medium.

13. Light unit according to claim 10, **characterised in that** the light-guiding element (3) consists of a carrier element made of a suitable transparent material around which a suitable plastics material is injection-moulded in order to form the light-guiding element (3).

14. Light unit according to any of claims 1 to 13, **characterised in that** the light unit (1) has one light source (4) which is arranged between two light-guiding elements (3).

15. Light unit according to one of claims 1 to 13, **characterised in that** the light unit (1) has one light-guiding element (3) which is arranged between two light sources (4).

16. Light unit according to any preceding claim, **characterised in that** the light source or sources (4) has or have a reflector arrangement (5) or a respective reflector arrangement (5) for coupling all the light that is emitted by the light source or sources into the light-guiding element or elements (3).

## Revendications

1. Luminaire destiné à l'éclairage d'une pièce, comprenant les caractéristiques suivantes :
a) au moins une source lumineuse (4) ;
b) un élément de guidage de lumière (3) en forme de coin ;
b-1) la face frontale (10) de l'élément de guidage de lumière (3), située à la plus grande distance des deux surfaces du coin (11, 13), étant la face d'entrée de la lumière émise par la source lumineuse (4) ;
b-2) la première surface du coin (13) formant un angle aigu avec la face d'entrée de la lumière (10), de telle sorte qu'elle réfléchit contre la deuxième surface du coin (11) la lumière pénétrant dans la face d'entrée de la lumière ;
b-3) la deuxième surface du coin (11) étant la face de sortie de la lumière de l'élément de guidage de lumière (3) ;
**caractérisé en ce que**, pour réfléchir la lumière, la première surface du coin (13) comporte des parties latérales (17), qui sont inclinées (α) vers l'intérieur par rapport au plan de la face de sortie de la lumière (11), et
c) **en ce que** la face de sortie de la lumière (11) est profilée (20) transversalement à la direction du coin avec des bosses et des creux juxtaposés.

2. Luminaire selon la revendication 1, **caractérisé en ce qu'**à distance (19) devant la face de sortie de la lumière (11) profilée de l'élément de guidage de lumière (3) est disposé un corps diffusant la lumière (20a) transparent, dont la face tournée à l'opposé de la face de sortie de lumière est profilée avec des bosses et des creux juxtaposés, le profilage du corps diffusant la lumière (20a) étant orienté sensiblement transversalement au profilage (20) de la face de sortie de la lumière.

3. Luminaire destiné à l'éclairage d'une pièce, comprenant les caractéristiques suivantes :
a) au moins une source lumineuse (4) ;
b) un élément de guidage de lumière (3) en forme de coin ;
b-1) la face frontale (10) de l'élément de guidage de lumière (3), située à la plus grande distance des deux surfaces du coin (11, 13), étant la face d'entrée de la lumière émise par la source lumineuse (4) ;
b-2) la première surface du coin (13) formant un angle aigu avec la face d'entrée de la lumière (10), de telle sorte qu'elle réfléchit contre la deuxième surface du coin (11) la lumière pénétrant dans la face d'entrée de la lumière ;
b-3) la deuxième surface du coin (11) étant la face de sortie de la lumière de l'élément de guidage de lumière (3) ;
**caractérisé en ce que**, pour réfléchir la lumière, la première surface du coin (13) comporte des parties latérales (17), qui sont inclinées (α) vers l'intérieur par rapport au plan de la face de sortie de la lumière (11), et
c) qu'à distance (19) devant la face de sortie de la lumière (11) de l'élément de guidage de lumière (3) est disposé un premier corps diffusant la lumière (20) transparent en forme de plaque, dont la face tournée à l'opposé de la face de sortie de la lumière est profilée avec des bosses et des creux juxtaposés.

4. Luminaire selon la revendication 3, **caractérisé en ce que**, en plus du premier corps diffusant la lumière (20) situé devant la face de sortie de la lumière (11), il est disposé un deuxième corps diffusant la lumière (20a) dont la face, tournée à l'opposé de la face de sortie de lumière (11) de l'élément de guidage de lumière (3), est profilée avec des bosses et des creux juxtaposés, le profilage du deuxième corps diffusant la lumière (20a) étant orienté sensiblement transversalement au profilage (20) du premier corps diffusant la lumière (20).

5. Luminaire selon l'une des revendications précédentes, **caractérisé en ce que** l'angle d'inclinaison (α) des parties latérales (17) par rapport au plan de la face de sortie de la lumière (11) est compris entre environ 30° à 50°.

6. Luminaire selon l'une des revendications précédentes, **caractérisé en ce que** les parties latérales (17) sont concaves ou convexes.

7. Luminaire selon l'une des revendications précédentes, **caractérisé en ce qu'**il est prévu entre les parties latérales (17) de la première surface du coin (13) des parties (18) qui sont orientées pratiquement parallèlement au plan de la face de sortie de la lumière (11) ou sont inclinées (β) vers l'extérieur par rapport au plan de la face de sortie de la lumière (11).

8. Luminaire selon la revendication 7, **caractérisé en ce que** l'angle d'inclinaison (β) des parties (18) par rapport au plan de la face de sortie de la lumière (11) est inférieur à 30° environ.

9. Luminaire selon l'une des revendications précédentes, **caractérisé en ce que** le profilage de la face de sortie de la lumière (11) et/ou le corps diffusant la lumière (20, 20a) est formé par des cannelures sensiblement longitudinales ou circulaires entre lesquelles sont intercalées des bosses, les bosses pouvant être conçues avec une section triangulaire, trapézoïdale, prismatique ou arrondie.

10. Luminaire selon l'une des revendications précédentes, **caractérisé en ce que** l'élément de guidage de lumière (3) est formé par au moins deux parties séparées (21a-c,22).

11. Luminaire selon la revendication 10, **caractérisé en ce que** l'élément de guidage de lumière (3) est formé par plusieurs couches (2 1 a-c) superposées.

12. Luminaire selon la revendication 10, **caractérisé en ce que** l'élément de guidage de lumière (3) est formé par une pièce profilée (21a ; 21a-b), dont la cavité (22) est remplie d'un milieu transparent approprié.

13. Luminaire selon la revendication 10, **caractérisé en ce que** l'élément de guidage de lumière (3) est formé par un élément de support réalisé dans un matériau transparent approprié, autour duquel a été projetée une matière plastique appropriée pour former l'élément de guidage de lumière (3).

14. Luminaire selon l'une des revendications 1 à 13, **caractérisé en ce que** le luminaire (1) comporte une source lumineuse (4), qui est agencée entre deux éléments de guidage de lumière (3).

15. Luminaire selon l'une des revendications 1 à 13, **caractérisé en ce que** le luminaire (1) comporte un élément de guidage de lumière (3), qui est agencé entre deux sources lumineuses (4).

16. Luminaire selon l'une des revendications précédentes, **caractérisé en ce que** la ou les source(s) lumineuse(s) (4) comporte ou comportent chacune un système de réflecteurs (5) pour injecter dans le ou les élément(s) de guidage de lumière (3) la totalité de la lumière émise par la ou les source(s) lumineuse(s).
